Europäisches Patentamt

European Patent Office

Office européen des brevets

(19)

(11) Publication number: 0 407 179 A1

# EUROPEAN PATENT APPLICATION

(21) Application number: 90307335.1

(22) Date of filing: 05.07.90

(51) Int. Cl.⁵: B64D 43/00, B64F 5/00, G07C 3/00

(30) Priority: 05.07.89 GB 8915406

(43) Date of publication of application:
09.01.91 Bulletin 91/02

(84) Designated Contracting States:
AT BE CH DE DK ES FR GB GR IT LI LU NL SE

(71) Applicant: BRISTOW HELICOPTERS LIMITED
Redhill Aerodrome
Redhill Surrey RH1 5JZ(GB)

(72) Inventor: Barry, Lionel Stuart
Wysswood, Dayseys Hill
Outwood, Surrey RH1 5QY(GB)
Inventor: Cogan, Michael Eugene
12 Western Road
Hurstpierpoint, West Sussex BN6 9TA(GB)

(74) Representative: Bayliss, Geoffrey Cyril et al
BOULT, WADE & TENNANT 27 Furnival
Streeteet
London EC4A 1PQ(GB)

(54) Aircraft health and usage monitoring systems.

(57) The disclosure relates to an aircraft health and usage monitoring system comprising a computer system (D.A.P.U.) for processing data relating to both flight profiles and selected indicators (SENSORS) of health and usage of an aircraft and means to monitor the flight profile and the selected indicators to supply corresponding data to the computer system. The computer system has predetermined thresholds therein in respect of the selected indicators and is arranged to record the duration and extent by which any threshold is exceeded in use of the aircraft. The indicators of the health and usage of the aircraft are selected from the following: engine health, transmission health, airframe health, aircraft systems health.

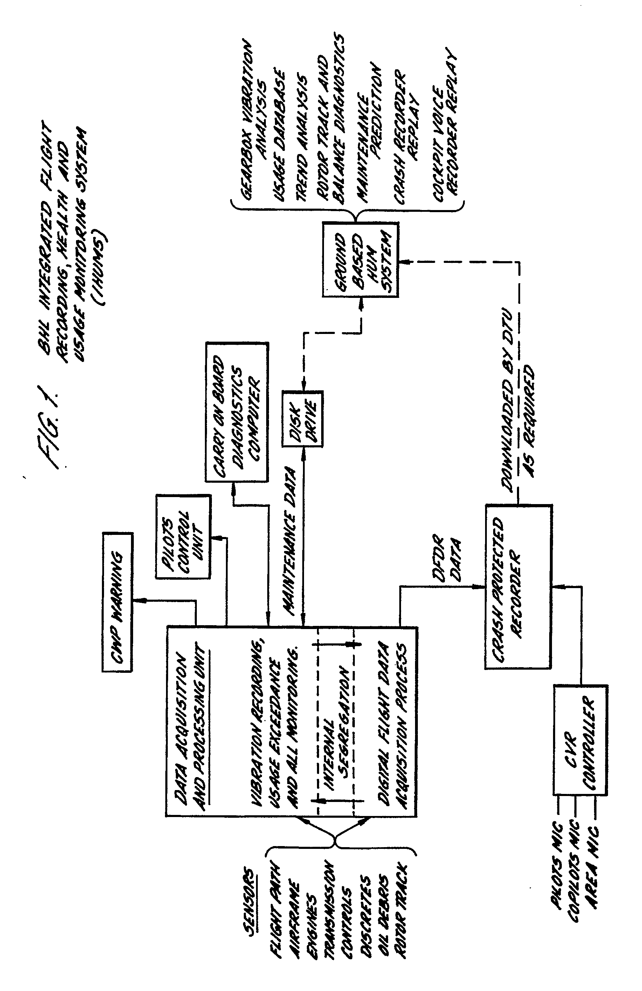

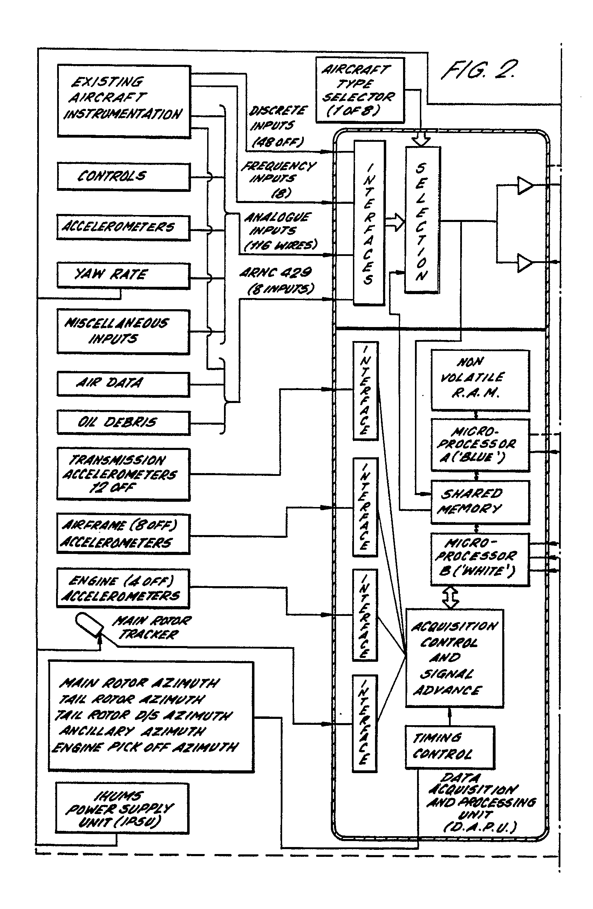

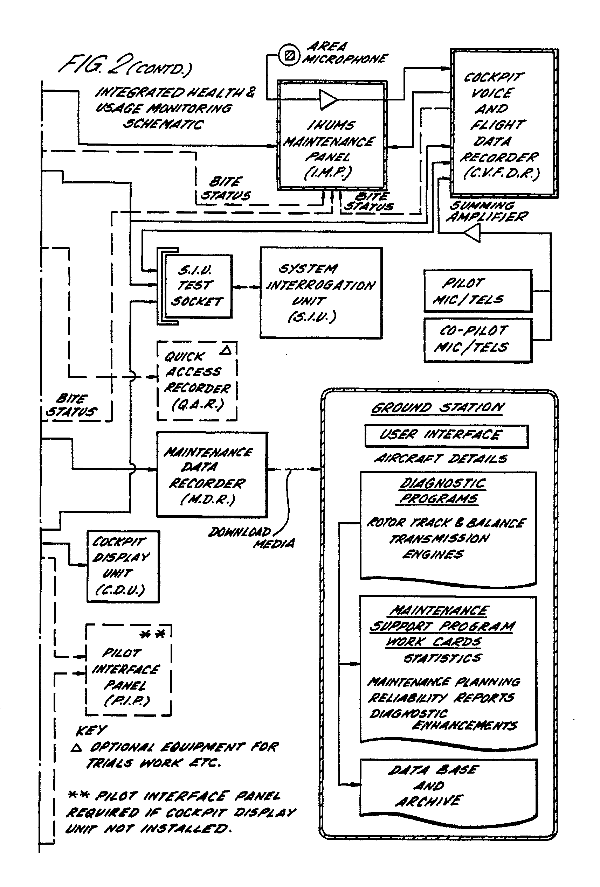

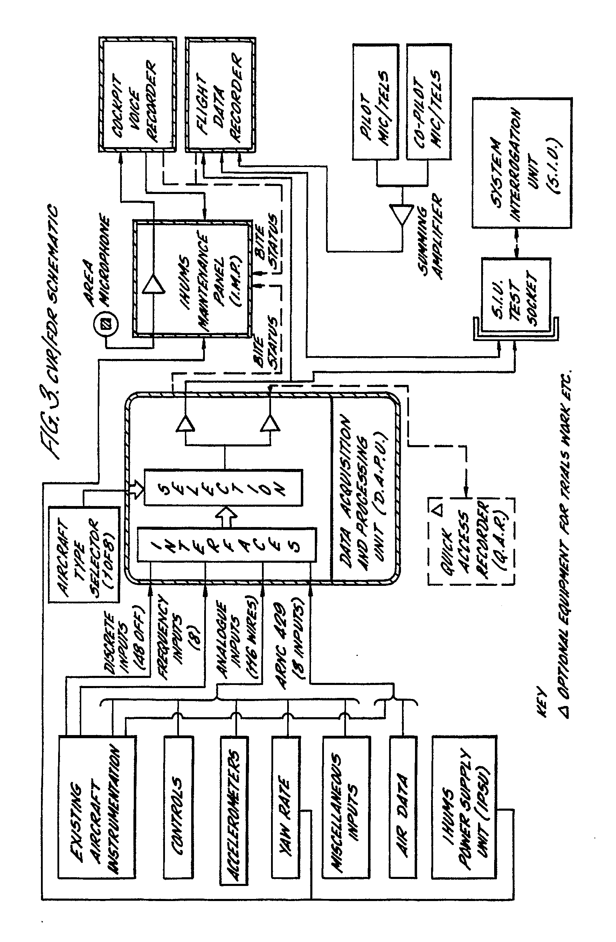

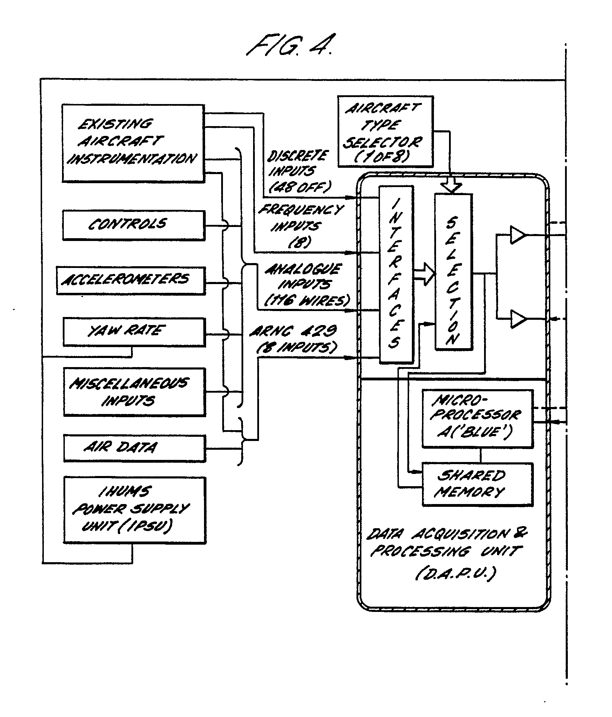

FIG. 1. BHL INTEGRATED FLIGHT RECORDING, HEALTH AND USAGE MONITORING SYSTEM (IHUMS)

## AIRCRAFT HEALTH AND USAGE MONITORING SYSTEM

This invention relates to an aircraft health and usage monitoring system. The term "health" as used throughout this specification is intended to mean the condition of a part or system of the aircraft to perform the function required of it. It is known to provide flight data recorders (FDR) and cockpit voice recorders (CVR) in aircraft to record flight data and cockpit crew voices respectively when an aircraft is in use for subsequent analaysis in the event of an accident. The object of this invention is to provide a system for monitoring the health and usage of certain important aspects of an aircraft component and system when in use to assist in the maintenance of an aircraft and also to provide relevant data in the event of a failure of a component or system.

Thus the present invention provides an aircraft health and usage monitoring system comprising a computer system for processing data relating to both flight profiles and selected indicators of health and usage of an aircraft, means to monitor the flight profile and the selected indicators and to supply corresponding data to the computer system, the computer system having predetermined thresholds therein in respect of the selected indicators and being arranged to record the duration and extent by which any threshold is exceeded in use of the aircraft.

By way of example, in the case of a helicopter, the selected indicators may include the main rotor track and balance, tail rotor balance, air frame vibration, main gearbox vibration, intermediate gearbox vibration, tail gearbox vibration, accessory gearbox vibration, engine vibration, gearbox oil debris and engine oil debris. More specifically, means may be provided for monitoring and supplying data to the computer system for total engine running times, time spent by engines operating in selected operating bands, time spent by rotor systems including main, intermediate, tail and accessory gearboxes in selected operating conditions and total running time for rotor heads and transmission systems.

The indicators may include means for determining stress on one or more components of the aircraft engine(s)/transmission(s)/air frame and the computer system may include means for calculating low cycle fatigue (LCF) from the stress information obtained in relation to those components and for storing the resulting information for subsequent processing.

The computer system may have output means for writing data accumulated therein from the monitoring means in the course of use of the aircraft to a recording medium for use and analysis by a separate ground based computer system to enable the aircraft health and usage to be monitored.

To enhance flight safety and meet FDR mandatory recording requirements for aircraft, the health and usage monitoring system may be combined with cockpit voice and flight data recorders.

The following is a description of a specific embodiment of the invention, reference being made to the accompanying drawings in which:

Figure 1 is a diagrammatic illustration of an integrated flight recording health and usage monitoring system (HUMS) for an aircraft; and

Figures 2 to 14 illustrate a further embodiment of the invention.

The purpose of the system is to obtain data from various aircraft sensors that will enable the operator to monitor the health of various components of the aircraft establish accurate usage cycles during the aircraft flight profile and to provide aircraft flight data information for the Accident Investigators in the event of an incident occuring on the aircraft.

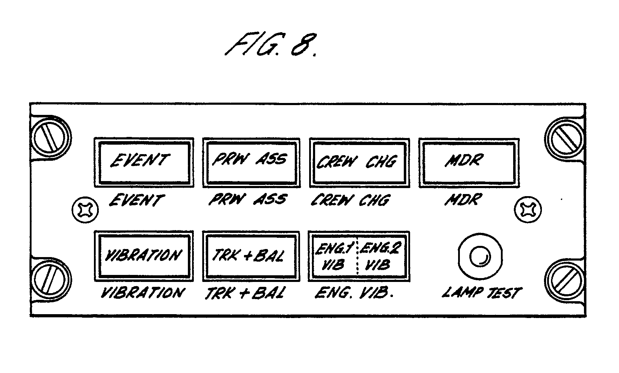

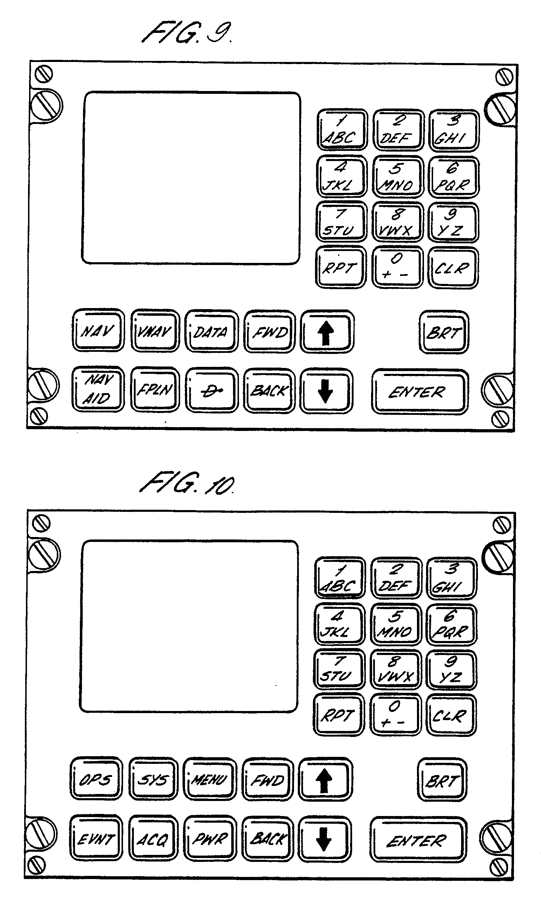

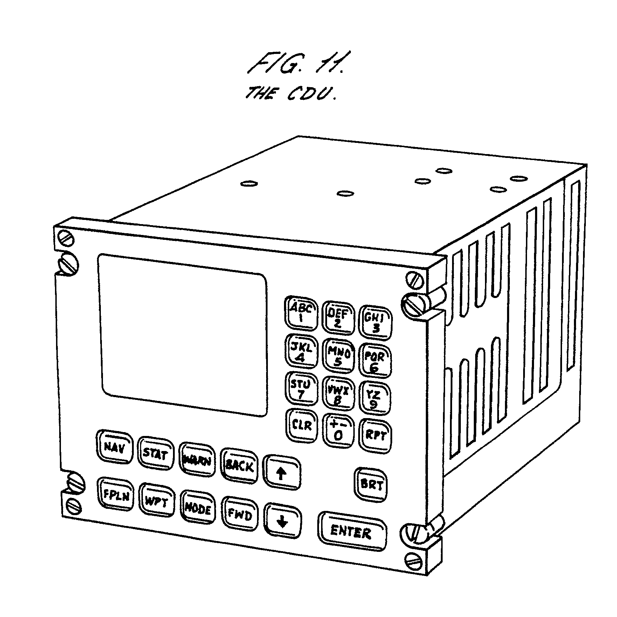

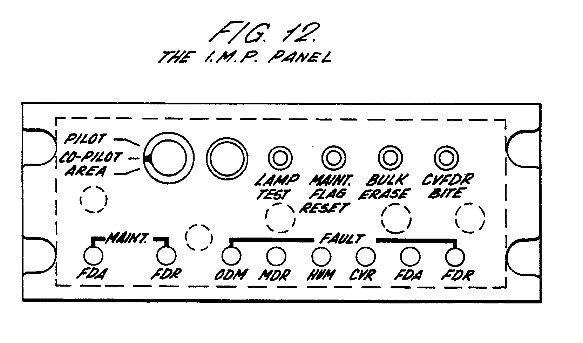

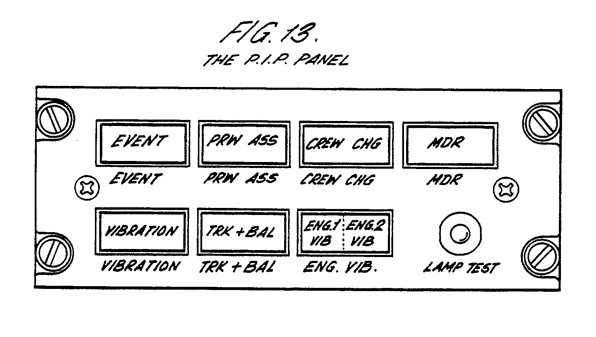

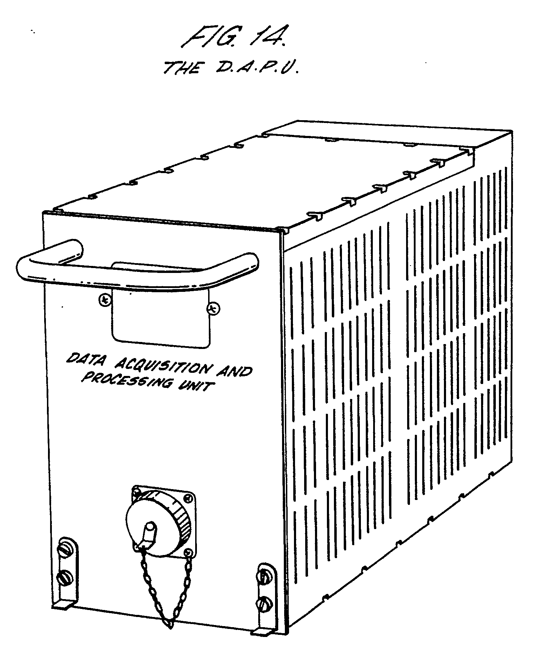

The system of Figure 1 comprises a Data Acquisition Processing Unit, (DAPU) as illustrated in Figure 14, a Cockpit Display Unit (CDU) as illustrated in Figure 11, a Digital Flight Data Recorder (DFDR), a Maintenance Recorder, a Ground Base Station and/or a carry on board Diagnostics Computer.

The system acquires data, as specified by the CAA, or FAA from the various aircraft sensors which are fed into the DAPU. Examples of such data are listed in the Data Schedule at the end of this description.

The FDR sub system is segregated within the DAPU from the HUM sub system to minimise the risk and consequences of common mode failures. (Normal cerification procedures apply to the FDR and CVR parts of the system).

Upon initial introduction of the HUM facilities provided by this combined system, there is no change to the maintenance procedures used to ensure the safety of the aircraft. As data is obtained and confidence in the system established, certain maintenance credits will be developed with the Approval Authorities. All of the airborne software is designed, built and tested to RTCA DO-178A LEVEL II certification procedures.

The signals are processed within the DAPU into four basic categories, Flight Data Acquisition, Exceedances, Health Monitoring and Usage Parameters. The DAPU will interface the Digital Flight Data Recorder (DFDR), a Quick Access Recorder (QAR), a Maintenance Recorder, a Diagnostics Computer and Cockpit Mounted Control Display Unit. The Cockpit Voice signals may be recorded directly onto the DFDR or onto a dedicated Cockpit Voice Recorder.

In normal operations the DFDR data is only be checked during routine maintenance (normally every 12 months).

The system is designed on a modular basis, so that less extensive systems can be fitted into smaller aircraft. A complete system, such as would be fitted to the larger aircraft as shown in attachment 2 would include:-

(i) COCKPIT VOICE RECORDER (CVR)

Cockpit Voice Recording with separate tracks for Pilopts, Co-pilots and Area Microphone Signals on the Combined Accident Data Recorder.

(ii) DIGTAL FLIGHT DATA RECORDER (DFDR)

Flight Data Recording on the Combined Accident Data Recorder with a parameter list which meets or exceeds the CAA, and FAA requirements. Higher data rates are available to accommodate the parameter lists i.e. 64, 128 or 286 x 12 bit words per second (WPS). A proposed parameter list for a large aircraft is shown in attachment 1. Built In Test (BIT) is part of the DAPU and performs testing of the processor and peripherals. The status of the BIT is available on the DFDR data stream.

iii) HEALTH - USAGE TO THE DFDR

This Flight Data Recorder Data Stream will accommodate a limited amount of Health and Usage-Data, covering Rotor Tracks Oil Debris, and detected Exceedance flags.

(iv) DFDR DATA TO THE MAINTENANCE PROCESSOR

The DFDR data system, together with a GMT time and data stamp is copied to the maintenance recorder during the take-off and landing phases to enable the condition of the DFDR sensors and the interface circuitry to be monitored on a daily basis.

(v) CVR/DFDR REPLAY

It is possible to replay the FDR and CVR recordings; safeguards are provided to protect the aircrews' interests with respect to the voice tracks.

(vi) EXCEEDANCE MONITORING

When an Exceedance is detected a report is transferred to the Maintenance Recorder detailing:- the Exceedance Parameter, Duration of Exceedance, Maximum Value of Exceedance, time into flight at the start of Exceedance, and a copy of the FDR data stream extending throughout the period of the exceedance and for a few seconds before and after. An Exceedance flag will also be identified on the FDR data stream to the DFDR. An Exceedance Summary will also be available on the Cockpit Display Unit (CDU), for use by aircrew or maintence staff.

(vii) LOW CYCLE FATIGUE MONITORING

The DAPU will provide for the Low Cycle Fatigue (LCF) calculations on two engines. The calculations for up to four components on each engine will be calculated by extracting selected flight parameters for each engine from the FDR data stream. The calculated LCF for each component is added to the cumulative count for that component and also stored as its per flight count. The cumulative and per flight LCFs for each component are maintained in non volatile store. The LCF report for each component is transferred to the maintenance recorder after engine shutdown, together with a GMT Time and Data stamp.

## (viii) LIFE USAGE MONITORING

The DAPU provides Life Usage reports for the two engines and transmission systems comprising of:-1. Total running time, 2. Time spent by each engine above certain speed or torque thresholds, 3. Engine starts, 4. Life Usage reports are also be provided for up to four transmission systems (i.e. Rotors and gearboxes).

## (ix) ENGINE PERFORMANCE MONITORING

After pilot initiation the DAPU enables the power assurance to be calculated for each engine by extracting the selected flight parameter for each engine from the FDR data stream. The power assurance calculation for each engine is transferred to the Maintenance Recorder and also to the non volatile store for display on the Cockpit Display Unit (CDU) if installed.

## (x) MAIN AND TAIL ROTOR TRACK AND BALANCE MONITORING

During certain flight conditions the pilot or the system can activate measurements of the main and tail rotor out of balance vibration, and measurements of the main rotor blade track and lag are also obtained. The DAPU provides a Track and Balance Report comprising of:-1. Main Rotor Track Summary, 2. Main Rotor Balance Summary, 3. Tail Rotor Balance Summary, 4. FDR frames Parameters prior to and after the event. 5. GMT Time and Data stamp which is transferred to the Maintenance Recorder.

## (xi) AIRFRAME VIBRATION MONITORING

At an appropriate flight condition, the DAPU automatically initiates acquisition of data from the airframe mounted accelerometers and the rotor track sensor. The DAPU airframe vibration report is transferred to the Maintenance Recorder together with a DMT Time, Data stamp and the associated frames of the FDR data stream.

## (xii) GEARBOX VIBRATION MONITORING

The DAPU automatically or by Pilot activated switch initiates acquisition of both raw and synchronously sampled and averaged data from accelerometers mounted on the main intermediate and tail gearbox systems. The signals are formed into a gearbox vibration report, together with frames from the associated FDR data, GMT Time and Date stamps and recorded onto the Maintenance Recorder.

## (xiii) ENGINE VIBRATION MONITORING

The DAPU automatically initiates acquisition of data from accelerometers mounted on the two engines. The DAPU engine vibration reports are transferred to the maintenance recorder together with a GMT Time, Date stamp and the associated frames of FDR data.

## (xiv) OIL DEBRIS MONITORING

The DAPU automatically initiates acquisition of data from various types of oil sensors installed in the main, intermediate, and tail gearboxes and, if required, both engines.

The DAPU Oil Debris reports for all components are transferred to the Maintenance Recorder togehter with GMT Time, Date stamp and the associated frames of FDR data.

## (xv) COCKPIT DISPLAY

The system will be capable of driving a full Cockpit Display Unit (CDU) which will provide the pilot with information on exceedances power assurance, alerts etc., together with the command button required for the acquisition of data. If required a simple display of push buttons and lights could be fitted which would enable the pilot to acquire defined data together with advisory/warning lights.

## (xvi) MAINTENANCE RECORDER

The Airborne Maintenance Recorder is usually a rugged three and a half inch removable media drive which will interface with the DAPU. This unit has a formatted storage capacity of 1.4Mb. Alternative forms of removable media recorders can be used if required.

## (xvii) GROUND STATION

The Ground Station consists of a Personal Computer based system which will include printer and network facilities. The basic Ground Station will be programmed to accommodate diagnostic suites for all aircraft types that are fitted with the HUMS system. The function of the Ground Station will be to:- 1) Produce and Replay disks, 2) Single data entry point for pilots/engineers, 3) Identify defects prior to failure of components, 4) Management of defects and corrective action taken, 5) Indications and remedies for problems found, 6) Provide technical records and management information, 7) Maintenance cycle counts, 8) Provide reliability reports, 9) To generate accurate information and measurements on which engineers can carry out diagnosis of rectification action on aircraft systems. The elements of the Ground Station which relate directly to aircraft maintenance will be developed, built and test to RTCA D0178A LEVEL II certification procedures. The Airborne Maintenance Recorder removable media will be transferred to the Ground Station and will provide Technical Log type information with indications of defects and exceedances that have been identified by the I.HUMS system.

An action items identified will have to be cleared by a Technical Log entry before the aircraft will be cleared for further flights.

## (xviii) DIAGNOSTICS COMPUTER

The Computer is used as a front diagnostics line test set to monitor parameters during fault finding and calibration purposes. In addition it also acts as a front line Ground Station for individual aircraft operating away from the main base.

## SYSTEM OPERATION

The flying schedule may be entered into the ground station computer (or down loaded from another system) as are the current satus of components fitted to the aircraft.

Before each flight the Captain is provided with a removable media containing the basic details of the flight. This removable media is placed in the Airborne Maintenance Recorder on the aircraft, where it confirms that the removable media has been fitted to the correct aircraft.

The aircraft is not be allowed on a further flight until that removable media has been returned to the Ground Station and the aircraft signed off by the Captain and Maintenance Staff. This, in practice, is equivalent to the current Technical Log process.

After completion of the flight, the Captain takes the removable media from the Maintenance Recorder and puts it into the Ground Station Computer. The Short-term Analysis Diagnostic Suites are immediately performed and 1st line reports are printed on the screen together where appropriate with a computer print out. Information displayed are exceedances, component defects, oil debris alerts etc., that have been identiified by the airborne system. The report cross-references the action required with the relevant section of the Maintenance Manual.

Rectifying action by the Maintenance Staff can be identified on the Ground Station Computer effectively clearing the Technical Log.

The Ground Station maintains a log of all faults found. This may be extended by the entry of manually identified snags. These faults can the be actioned and closed (or deferred) as required.

Various analysis of the maintenance data base may be performed; for example identify how many servo valves have been changed on one aircraft or how many times gearbox accelerometers have been replaced etc.

The raw data may be analysed using prepared suites of functions for trending and graphing results (i.e. Trending the results of Main gearbox vibration analysis together with the associated oil changes, magnetic plug checks, oil analysis etc.)

The system will provide off line analysis and management summaries as required.

| FDR Parameter List for Aircraft (Greater than 2700 Kg) | | |
|---|---|---|
| Parameter | Sample Rate (Hz) 12-bit Words | Discretes |
| Time (GMT) | | 1 |
| Pressure Altitude | 1 | |
| Indicated Airspeed | 1 | |
| Mangetic Heading | 1 | |
| Normal Acceleration | 8 | |
| Pitch attitude | 4 | |
| Roll attitude | 4 | |
| Radio Key | | 1 |
| No. 1 Engine Ng | 1 | |
| No. 1 Engine Nf | 1 | |
| No. 1 Engine Q | 2 | |
| No. 1 Engine T4 | 1 | |
| No. 2 Engine Ng | 1 | |
| No. 2 Engine Nf | 1 | |
| No. 2 Engine Q | 2 | |
| No. 2 Engine T4 | 1 | |
| Main Rotor Speed | 2 | |
| Collective Pitch | 2 | |
| Longitudinal Cyclic | 4 | |
| Lateral Cyclic | 4 | |
| Tail Rotor Pedal | 2 | |
| Hyd 1 Pressure | | 1 |
| Hyd 2 Pressure | | 1 |
| Outside Air Temperature | 1 | |
| AFCS engagement Discretes | | 1 |

| FDR Parameter List for Large Aircraft (Greater than 5700 Kg) | | |
|---|---|---|
| Parameter | Sample Rate (Hz) 12-bit Words | Discretes |
| Main gearbox oil pressure | 1 | |
| Main gearbox oil temperature | 1 | |
| Yaw acceleration | 4 | |
| Sling force load | 2 | |
| Longitudinal Acceleration | 4 | |
| Lateral Acceleration | 4 | |
| Radio Altitude | 1 | |
| Glideslope Deviation No. 1 | 1 | |
| Localiser Deviation No. 1 | 1 | |
| Glideslope Deviation No. 2 | 1 | |
| Localiser Deviation No. 2 | 1 | |
| Marker Beam Passage (3 off) | | 1 |
| Warnings | | 1 |
| NAV Frequency selection | | |
| DME distance | 1 | |
| Latitude | 1 | |
| Longitude | 1 | |
| Nav computed groundspeed | | |
| Nav computed drift angle | | |
| Landing gear | | 1 |

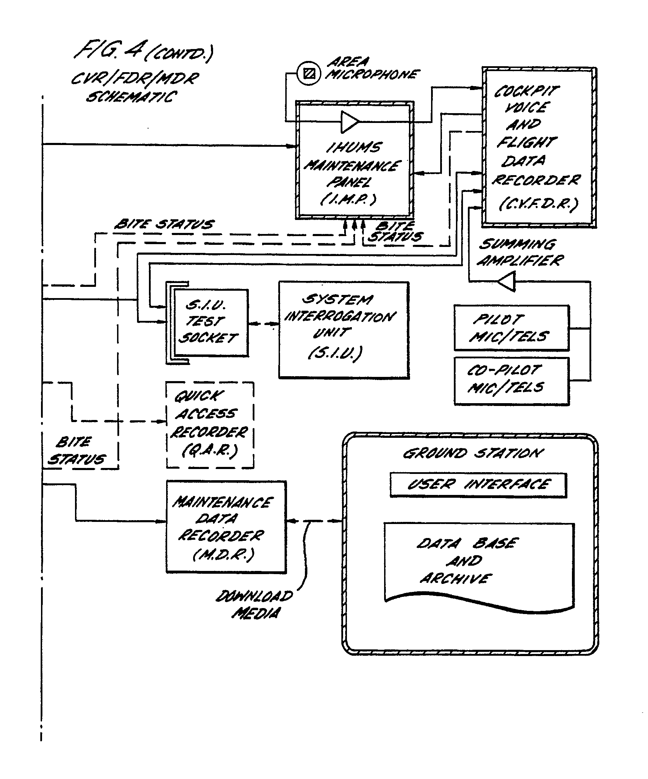

A further example of the integrated Health and Usage Monitoring system (IHUM) in accorance with the invention which will now be described with reference to Figures 2 to 10. The system provides for the automatic sensing and recording of date from a number of strategically positioned sensors, both on the airframe and the major mechanical components; flight Date Recorder parameters are transferred to a combined Cockpit Voice and Flight Data Receorder (CVFDR) whilst the Health and Usage Monitoring parameters are transferred to a Maintenance Data Recorder (MDR).

AIRBORNE DIAGNOSTICS

The pilot may interrogate the system during flight, via a Cockpit Display Unit (CDU), and may also enter additional operational information on the CDU, usage and exceedance may be viewed.

Date is transferred onto a removeable media during the flight/mission, for subseqeunt transfer to a groundstation Personal Computer.

GROUND BASED DIAGNOSTICS

Analysis of the data is performed in two stages. The first stage is completed within one minute and identifies the aircraft/component usage, together with any exceedances that may have occurred during the flight which would generate a technical log entry to place the aircraft unserviceable. The second stage takes approximately 3 minutes to complete during which time a large number of parameters are closely analysed.

From some of the data extracted, changes in the state of the helicopter and its equipment may be tabulated. These trends, when evaluated, provide a vital aid to preventative maintenance in that equipment which starts to show an increase in normal levels can be removed before irreparable damage occurs.

GLOSSARY OF TERMS

A & AEE - Aeroplane and Armament Experimental Establishment

AAIB - Aircraft Accident Investigation Branch
ABS - Analogue Digital Converter
AIDS - Aircraft Integrated Data System
ARINC - Aeronautical Radio Incorporated
ATA - Air Transport Association of America
ATR - Air Transport Radio
BALPA - British Airline Pilots Association
BHL - Bristow Helicopters Limited
BIT - Built In Test
BITE - Built In Test Equipment
CAA - Civial Aviation Authority (United Kingdom)
CVR - Cockpit Voice Recorder
CDU - Control and Display Unit
CVFDR - Combined Voice and Flight Data Recorder
CRT - Cathode Ray Tube
CTS - Clear To Send
DAPU - Data Acquisition and Processing Unit
DAU - Data Acquisition Unit
DEG - Degress
DFDR - Digital Flight Data Recorder
DITS - Digital Information Transfer System (ARINC 429)
DOS - Disk Operating System
DTU - Data Transfer Unit
EEPROM - Electrically Eraseable Programmable Read only Memory
EGT - Exhaust Gas Temperature
EPROM - Eraseable Programmable Read Only Memory
EUROCAE - European Organisation for Civial Aircraft Electronics
FAA - Federal Aviation Authority
FDAU - Flight Data Acquisition Unit
FDEP - Flight Data Entry Panel
FDR - Flight Data Recorder
FPM (fpm) - Feet Per Minute
FSK - Frequency Shift Keying
GMT - Greenwich Mean Time
GS - Groundstation
G/S - Glide Slope
IGB - Intermediate Gear Box
IHUMS - Integrated Health and Usage Monitoring System
IMP - IHUMS Maintenance Panel
LCF - Low Cycle Fatigue
LRU - Line Replaceable Unit
LSB - Least Significant Bit
LWC - Liquid Water Content
LWL - Left Wing Low
KN - Knots
KIAS - Knots Indiagted Airspeed
MDR - Maintenance Data Recorder
MGB - Main Gear Box
MIL-STD - Military Standard (USA)
MMI - Main Machine Interface
MPOG - Minimum Pitch On Ground
MRG - Main Rotor Gearbox
MSB - Most Significant Bit
MS-DOS - Microsoft - Disk Operating System
MSLS - Multi Sector Load Sheet
Nf - Free Power Turbine Speed
Ng - Gas Generator Speed
Nr - Main Rotor RPM

Nt - Tail Rotor Speed
NVR - Non Volatile Ram
NVRAM - Non Volatile Random Access Memory
ODM - Oil Debris Monitoring
PAV - Pleassey Avionics
PC - Personal Computer
PIP - Pilots IHUMS Panel
PSD - Project Specification Document
Q - Engine Torque
QAR - Quick Access Recorder
QDM - Quantitative Debris Monitor
RADS - Rotor Analysis Diagnostic System
RAM - Random Access Memory
RMS - Root Mean Square
RNAV - Area Navigation System
RPM (rpm) - Revolutions Per Minute
RRPM (rrpm) - Rotor Revolutions Per Minute
RTB - Rotor Track and Balance
RTCA - Radio Technical Commission for Aeronautics
RTS - Ready To Send
RWL - Rigth Wing Low
RZ - Return to Zero
SEC - Seconds
SIU - System Interrogation Unit
SOAD - Spectrographic Oil Analysis Programme
SSD - Software Specification Document
TGB - Tail Gear Box
TRG - Tail Rotor Gearbox
TTL - Transistor Transistor Logic
WHL - Westland Helicopters Limited
w.p.s. - Words per second
w.r.t. - with respect to

## 1. System Description

Reffering firstly to Figure 2, the IHUMS consists of a number of airborne equipments and some ground equipment. An aircraft certification change to accommodate changes in maintenance which may be introduced by IHUMS may be required.

The system is designed to be compatible to all current twin turbine single rotor helicapters. It is not directly applicable to tandem rotor aircraft, although a modified computer unit would be able to provide the daul rotor trackers and larger number of sensor inputs needed for this aircraft.

## 2. System Elements

### A Data Acquisition

The airborne installation is based around a Data Acquisition Processing Unit (DAPU), with an associated Control and Display Unit (CDU) mounted on the interseat console. The DAPU is interchangeable between a number of aircraft types without modification. A considerable amount of extra instrumentation is required, although wherever possible the existing aircraft instruments are used. Several versions of the DAPU are available to meet customers fleet requirements

This unit contains all the conditioning circuitry necessary to sample and accurately monitor a wide range of different types of electrical inputs for subsequent recording, measurement or processing. The mandatory data output interfaces to a standard ARINC 573/717 Flight Data Recorder and a standard ARINC Quick Access Recorder (QAR). Selected mandatory data together with raw and partially processed HUM data is also fed to a Maintenance Data Recorder (MDR).

9

The DAPU uses twin microcomputers with shared memory to simultaneously perform real time monitoring and intermittant health monitoring tasks. One microcomputer analyses DFDR data in real time for exceedances, flight condition indentification, LCF computation etc, thereby leaving the second microcomputer free to handle irregular tasks such as interfacing to the CDU or SIU, and controlling the vibration acquisition tasks. Both microcomputers run the ADA multitasking operating system.

A non-volatile memory is incorporated within the DAPU which contains computed results such as LCF counts, exceedances and component operating times. Documentary data such as a/c ident, engine number, gearbox number etc. is also stored. This memory can be downloaded/uploaded by the aircrew via the Maintenance Data Recorder.

Comprehensive BIT facilities to satisfy the new CAA requirements have also been incorporated.

The Data Acquisition and Processing Unit (DAPU) acquires data for both the Digital Flight Data (accident) and Health and Usage (maintenance) Recorders.

B Accident Data Recording

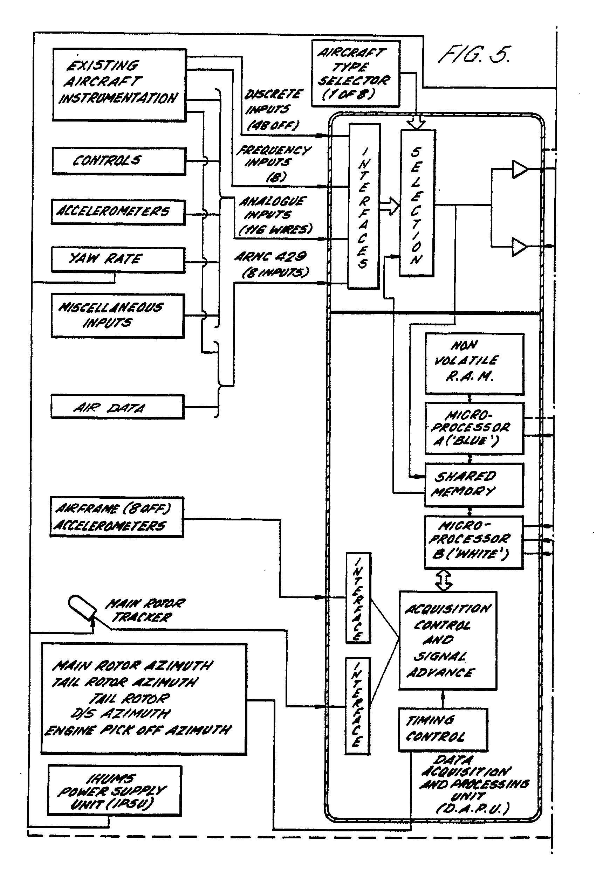

Reffering to Figure 3 of the drawings IHUMS adopts a combined voice and data recorder in order to save a very significant amount of weight and space. While this approach is acceptable to the CAA, the design permits any suitable configuration of crash protected recorders to be used albeit with an operational penalty (i.e. the introduction of separate cockpit voice and flight data recorders).

C Maintenance Data Recording

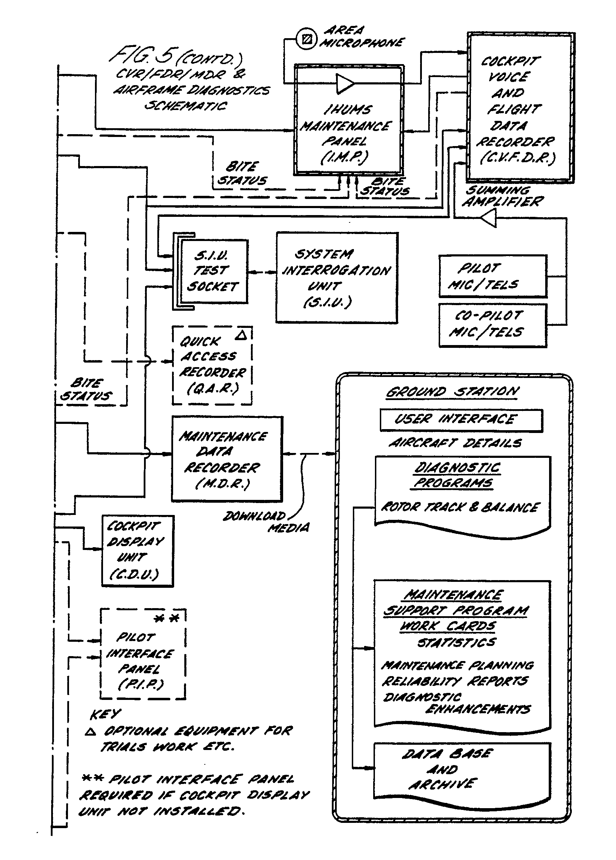

Maintenance systems which gather and store data will generate considerable amounts of information, therefore some form of storage is necessary. The solution to these problems adopted by IHUMS is to use electromagnetic removeable media as illustrated diagrammatically in Figure 4.

D Ground Station

Ground based computers receive the data carried from the aircraft by the pilot, and carry out analysis and archiving programs. In order that the system can be used to support single operated aircraft as well as large fleet operations, the ground based computer system is able to run on either a modest portable computer or a multi-processor networked system.

D Exceedance Monitoring

A large number of exceedance conditions will be continuously available using data from the DFDR data stream and limits and thresholds stored in NVR. The limits and thresholds can be updated, monitored to allow for changes in component modification state. Whenever any one of the monitors detects an exceedance, a time history of the event will be available for ground analysis. This record shall last from a time 4 seconds before the start of the event to a time either 20 seconds later or 4 seconds after the end of the event, whichever is the sooner.

The exceedances are identified using bit mapped words passed into the DFDR data stream and a log record is built identifying the type of exceedance, the duration of that exceedance, the maximum value obtained by the critical parameter and time of the start of the exceedance. For some exceedances it is necessary to establish a cumulative count of the time spent in that condition, and so the DAPU stores a cumulative count in non-volative form for all monitored exceedances.

NOTE:

Some exceedance criteria are subsets of others, for example Ng greater than 105% can only occur while Ng is greater tha 100%. In cases such as this, one time history will be created, relating to the exceedance Ng greater than 100%, yet two log records will be created to identify the time spent in exceedance of each threshold level separately.

## E Low Cycle Fatigue

Low Cycle Fatigue (LCF) indices are calculated for up to four components on each engine. The algorithms used are obtained from the Aircraft Operating Manual or Engine Manufacturers manual. The incremental and cumulative LCF count are held in NVR, upload along with other component lives and cycle counts. To support accurate LCF calculations the DAPU accommodates Ng sampling at 4 Hz and Nf sampling at 2 Hz.

## F Engine Performance Monitoring

The DAPU implements the engine power assurance algorithms from the aircraft manufactuers flight manual. Wherever possible this will permit preflight assurance checking.

It is often necessary for the pilot to ensure that the engines are set in a suitable operating condition before gathering data for power assurance purposes, therefore this process will always be pilot initiated. On some aircraft a single initiation will relate to both engines, whereas for other aircraft types the engines are checked separately and so two initiations are required. In either case, whenever the pilot initites engine performance monitoring, a frame of DFDR data shall be stored onto the maintenance recorder.

The DAPU will compute the performance indices using algorithms pertinent to that aircraft type.

The result shall be computed in not more than 30 seconds and preferably in less than 10 seconds. A data file containing a DFDR data frame will still be stored to allow the ground computer to obtain power assurance data for trending and any other analysis.

## G Trending Data

This facility allows the pilot to enter data into the IHUM system via the CDU, normally when the aircraft is flying in the cruise. Such data is used for trend monitoring over a number of flights, and includes parameters which are not instrumented by the DAPU such as hydraulics and engine oil temperatures and pressures.

When the pilot has entered this data, a frame of DFDR data is added to identify the flight condition and to allow all the instrumented parameters to be trended over consistent flight conditions.

## H Track and Balance

Track and balance data capture falls into three categories. Firstly, data is automatically acquired on routine flights (in a number of flight conditions on each flight) from which the health of the main and tail rotor systems are monitored using analysis programs running on the ground computer. Secondly, the pilot can initiate data capture to identify particular problems on the aircraft when necessary, and thirdly it is possible to monitor the airframe vibration and main rotor track signals using the SIU during maintenance test flights.

## (1) Routine Acquisition for On Board Processing

On every flight, a measurement of the main and tail rotor out of balance vibration and main rotor track is made at a number of positions around the aircraft, and data is recorded automatically during identified flight conditions so that the IHUM groundstation can develope a trend of rotor order vibration magnitude. When the vibration exceeds a threshold level, or when the corrective maintenance action is sufficient to warrent implementation the groundscrew are prompted to carry out a corrective maintenance action. When this has been carried out the aircraft will be returned to service. A complete set of rotor track and balance data is then gathered on the next flight to check that the maintenace action has been applied correctly and to check that the level of vibration has decreased. The two data sets (obtained before and after maintenance) then provide a basis for refinement of the maintenance algorithms.

## (a) Main Rotor Track

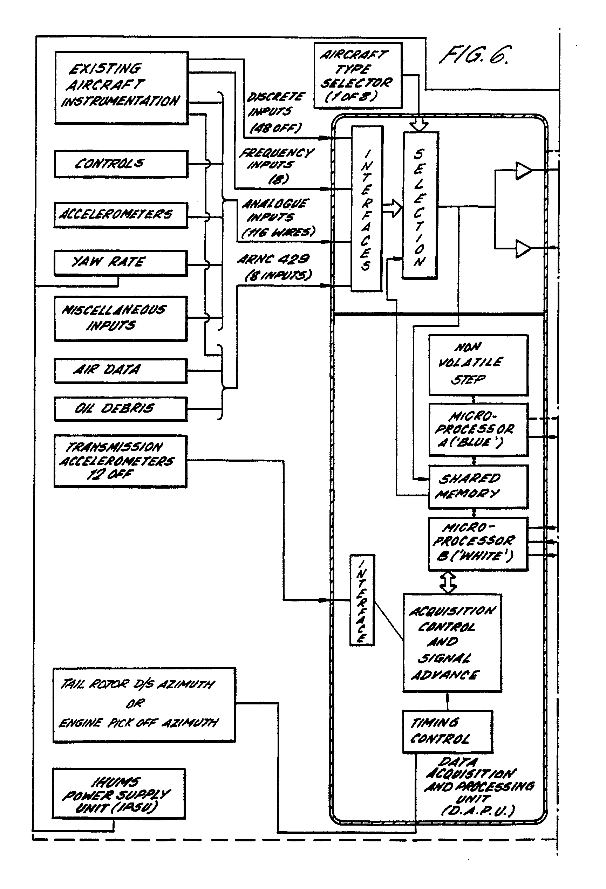

The system interfaces directly to either an active or a passive rotor track sensor as illustrated in Figure 5. Data from the sensor is used both for acquisition of data for diagnostic purposes (track and balance) and for recording blade position information for the DFDR.

(b) Main Rotor Balance

Up to eight accelerometers are fitted around the cockpit, cabin and tail to measure the airframe vibration due to main and tail rotor out of balance and aerodynamic forces.

(c) Tail Rotor Balance

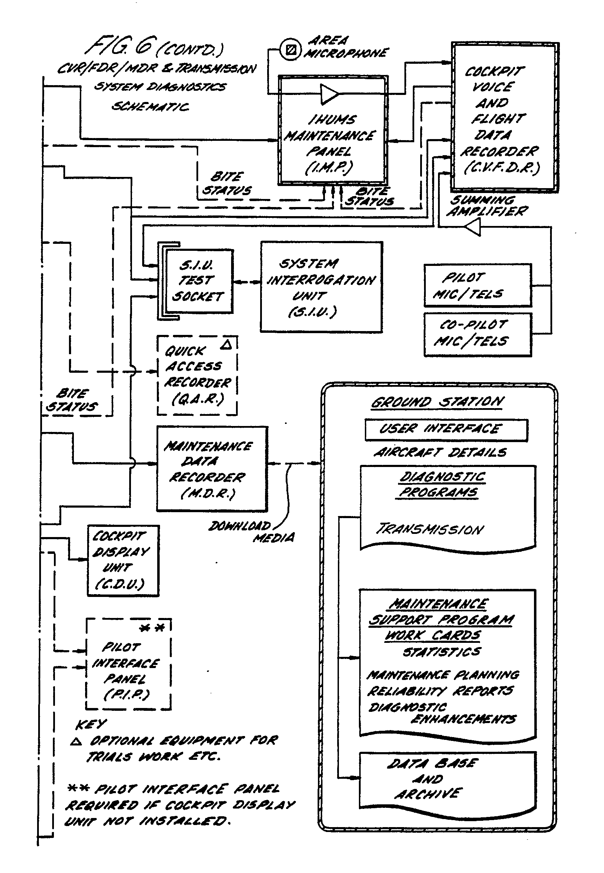

The tail mounted accelerometer(s) is used to monitor tail rotor out of balance forces, using signal processing as for the main rotor forces except that the processing is synchronous to a tail rotor azimuth marker as illustrated in Figure 6.

(d) Airframe Vibration

Data is obtained from the airframe accelerometers for diagnosis of vibration at other than the first harmonic.

(2) Pilot Initiated Acquisition

The data acquired is the same as for routine acquisition, except that it is annotated as having been required by the pilot.

(3) Maintenance Acquisition

During dedicated maintenance test flights, the SIU can be carried onto the aircraft and connected into the IMP port. The maintenance engineer is then able to initiate any of the DAPU acquisition modes, with the data being fed directly back to the SIU.

I Gearbox Vibration

Gearbox vibration data is used to detect gear and/or bearing defects within all of the stages of the helicopter gearboxes including the accessory drives. Data capture may be initiated by the pilot but is normally be acquired automatically for on board processing to monitor airborne capability. The downloaded data is analysed using special-to-type programs on the ground to yield information on the condition of each element of each gearbox in the aircraft. Automatic recognition of alert levels in the groundstation is essential because of the large number of parameters present.

J Engine Vibration

Two types of engine vibration monitoring are supported, namely in-flight and ground based monitoring.

(1) In-Flight Monitoring

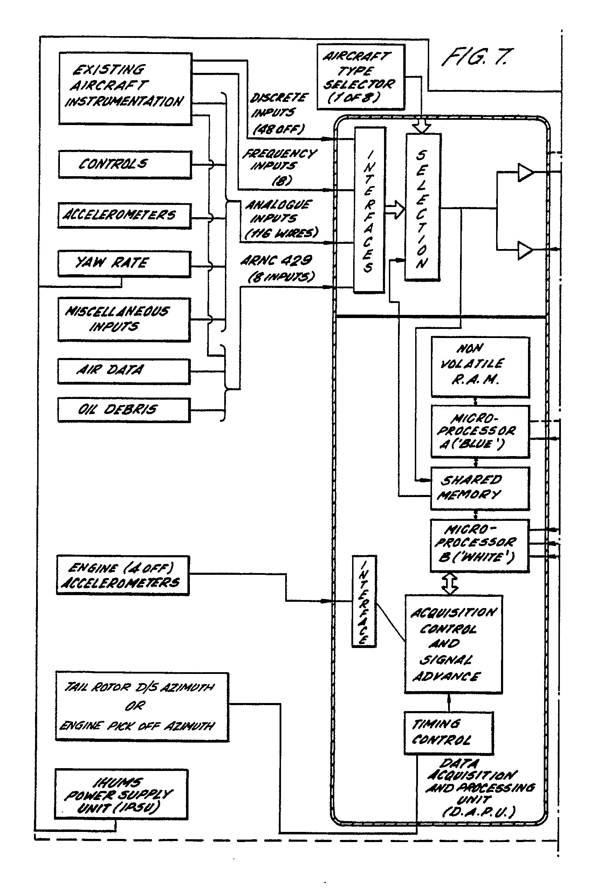

Due to the rapid propogation rate of certain gas turbine failure modes, limited continuous monitoring is performed by the DAPU as illustrated in Figure 7.

The basic sequence of operations runs as a continuously repeating loop having lower priority than any pilot, maintenance crew or automatically initiated task. The loop monitors each of the four engine shaft in sequence before repeating the cycle. While no other operations are in progress the loop cycle time is approximately one minute. This time is extended if other tasks which use the same signal paths are in progress.

## (2) Routine Monitoring

Routine engine vibration analysis is based upon recording both the raw vibration signals from the engine mounted accelerometers and the engine speed parameters fed to the FDAU. On the ground, spectral analysis techniques are used to compute a vibration spectrum and the speeds of the rotating components are incorporated to identify any unwanted peaks which occur.

## K Ancillary Equipment Vibration

A single piece of ancillary equipment such as an oil cooler fan can be monitored using an accelerometer and, if necessary, a dedicated magnetic pickup for synchronisation. Synchronous or asynchronous sampling will be available and the data acquisition processes described in Appendix B for gearbox vibration will be used.

## L Oil Debris Monitoring

On-line oil debris monitoring will be included when suitable sensors become available.

## M Oil Sampling

IHUM as a system supports oil sampling by prompting maintenance personnel to take oil samples at the required periodicity, and by accepting oil analysis results into the IHUM groundstation database. It will be possible to recall and plot concentrated oil debris records over the life of any gearbox or engine. Data relating to component changes and oil changes will be presented alongside oil debris results.

## N Configuration Control

The flight data acquisition section of the DAPU is pin programmable between eight aircraft types for IHUMS. However, there is an additional requirement for certain categories of data, such as exceedance limits, to be modified in the field. This type of data is held in non-volatile storage thereby enabling the system to monitor and record any exceedances correctly. To control parameter changes in non-volatile storage, configuration control codes in that storage are changed whenever the controlling parameters are modified. A test of the configuration control is carried out an every start up by comparing the expected control codes included in the MDR removable media uploaded data with those already in NVR. This method allows a DAPU to be switched between aircraft types and to monitor exceedances and record the data that the preset parameters for that aircraft type dictates.

## O Operational Data Input

The pilot is able to initiate IHUMS processes and enter operational data, on the ground and in-flight, which is stored on the MDR for downloading into an operational system.

## Component Descriptions

## A Data Acquisition and Processing Unit (DAPU)

This unit contains all the conditioning circuitry necessart to sample and accurately monitor a wide range of different types of electrical inputs for subsequent recording, measurement or processing. The mandatory data output interfaces to a standard ARINC 573/717 Flight DAta Recorder and a standard ARINC Quick Access Recorder (QAR). Selected mandatory data together with raw and partially processed HUM date is also fed to a Maintenance Data Recorder (MDR).

The DAPU uses twin microcomputers with shared memory to simultaneously perform real time monitoring and intermittent health monitoring tasks. One microcomputer analyses DFDR data in real time for exceedances, flight condition identification, LCF computation etc, thereby leaving the second microcomputer free to handle irregular tasks such as interfacing to the CDU or SIU, and controlling the vibration acquisition tasks. Both microcomputers run the ADA multitasking operating system.

A non-volatile memory is incorporated within the DAPU which contains computer results such as LCF counts, exceedances and component operating times. Documentary data such as a/c ident, engine number, gearbox number etc. is also stored. This memory can be downloaded/uploaded by the aircrew via the Maintenance Data Recorder.

Comprehensive BIT facilities to satisfy the new CAA requirements have also been incorporated.

The Data Acquisition and Processing Unit (DAPU) acquires data for both the Digital Flight Data (accident) and Health and Usage (maintenace) Recorders.

The functions of the DAPU are as follows:

Usage (Maintenance)

(a) It will record and retain in non-volatile memory the Engine Running Time for each engine, the bearboxes and other lifted components.

(b) The DAPU will calcualte and retain in non-volatile memory Cumulative counts for engine starts, rotor engagement, take-off and landings, perform exceedance monitoring of engine, rotor and transmission parameters. Exceedance recordings include a complete time history from the FDR data stream etc. for post flight analysis and a summary for display on the cockpit CDU.

(c) Low Cycle Fatigue indices will be calculated for up to four components on each engine.

(d) Engine health monitoring will be calculated automatically on pilot demand.

Health (Maintenance) On Board Processing

The DAPU provides the following "in flight" diagnostics:-

(a) continuously perform exceedance monitoring of engine, rotor and transmission parameters. Exceedance recordings will include a complete time history from the FDR Data Stream etc. for post-flight analysis, and a summary for display on the CDU. Exceedances will be classified to yield outputs suitable for inclusion in the DFDR data stream (36 flags) or for the PIP (2 levels of annunciation).

(b) monitor the engines for excessive vibration.

(c) perform engine exhaust gas monitoring when suitable sensors became available.

(d) upon pilot initiation, the system will:-

    (1) sequentially gather data for:-

        (a) airframe vibration.

        ( b ) vibration of main, intermeidate, tail, and where fitted, combiner gearboxes.

        ( $\bar{c}$ ) vibration of ancillary components.

    ( 2 ) sequentially gather data for main rotor track and balance and tail rotor balance.

    ( $\bar{3}$ ) carry out engine performance monitoring when demanded by the pilot.

    ( $\bar{4}$ ) enter trending data.

    ( $\bar{5}$ ) display system status on CDU.

(e) If no pilot initiated task is in progress, the SIU may be used to initiate any one of the following types of data acquisition:-

    ( 1 ) airframe vibration.

    ( $\bar{2}$ ) main rotor track and balance.

    ( $\bar{3}$ ) tail rotor balance.

    ( $\bar{4}$ ) vibration of the main, intermediate,.tail, accessory and, where fitted, combiner gearboxes.

    ( $\bar{5}$ ) engine vibration.

    ( $\bar{6}$ ) ancillary equipment vibration.

    ( $\bar{7}$ ) oil debris sensor monitoring (when sensors are available)

( 8 ) engine exhaust gas monitoring (when sensors are available).

( $\overline{9}$ ) DFDR monitoring.

NOTE: When initiated from the maintenance computer these process output data only to the SIU and not to the maintenance recorder. (f) If neither pilot or maintenance engineer initiated tasks are in progress, the DAPU will detect certain specified flight conditions and at the correct condition autometically initiate the appropriate process from the following:-

( 1 ) recording FDR data to the maintenance recorder.

( $\overline{2}$ ) airframe vibration, vibration of the main, intermediate, tail, accessory and, where fitted, combined gearboxes, engine vibration and ancillary equipment vibration.

( 3 ) main rotor track and balance and tail rotor balance.

NOTE: Any automatically initiated data gathering process will be nullified by a manually initiated process.

### (4) Self Test

The DAPU performs continuous self-testing.

### Control and Display

Types of pilot display utilised are:-

### (1) Pilots IHUMS Panel (PIP)

#### (a) PIP Description

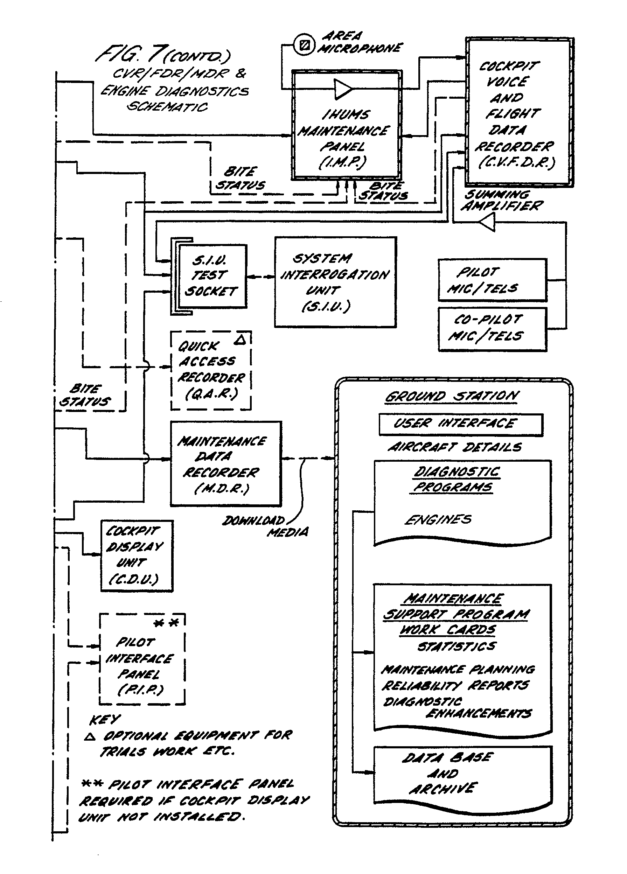

Referring to Figure 8 of the drawings, the PIP is a small panel of ARINC rail width, with all of the controls and indications necessary to use the IHUM system. However, it is not able to perform the functions which require a test output and so exceedance display, power assurance results display, operations data entry etc. are not catered for in systems fitted with this panel.

PIP units are to be installed on small aircrafts such as Bell 212, S76 etc. where space is limited, associated with an IMP unit the panel of which is illustrated in Figure 12.

PIP panel is provided with background lighting to illuminated legends. Power is 28V dimmed.

#### (b) PIP Buttons

The PIP illustrated in Figure 13 has six press button momentary action switches. Of these, five are associated with the IHUM DAPU functions, and carry legends that are illuminated while the function is active.

These switches are inscribed:-

TRK/BAL Green

EVENT: Green

CREW CHG: Amber

VIBRATION: Green

PWR ASS: Green

The other switch is a basic unlit push button which enables to perfrm a lamp test and is marked "LAMP-TEST".

#### (c) PIP Indicators

PIP panel is provided with two dual lamp sunlight readable square indicators to reflect Engine 1 and 2 vibration warnings and MDR warning.

These warning captions are marked

- ENG VIB

- MDR

Illuminated switches bulbs and the ENG VIB and MDR indicators are powered by the 28V Day/Night.

| DATA SUMMARY | |
|---|---|
| POWER (LAMPS) | 28V DC TO DO-160B |
| POWER (LOGICS) | 5V DC (DERIVED FROM 15V DC) |
| POWER OPERATING | 15V DC |
| ENVIRONMENTAL: | TO RTCA DO-160B |
| TEMPERATURE: | CATEGORY A1 |
| ALTITUDE/HUMIDITY: | OPERATING 15 DEGREES C TO 70 DEGREES C |
| VIBRATION/MACH SHOCK: | CATEGORY J/Y |
| EMC COMPATIBILITY: | CATEGORY A |

(d) Use of DAPU-Realted Functions

( 1 ) Event

Pressing the EVENT button will activate the pilot event function, and for a period of 5 seconds from that moment the caption will be illuminated. This function shall operate at all times, including a crew change.

(2) Vibration Acquire

Pressing the VIBRATION button will initiate a complete set of vibration acquisitions. During this period the caption will be illuminated. This function may only be selected if the TRK/BAL and CREW CHG captions are extinguished.

(3) Acquire Rotor Track and Balance Data

When the pilot presses the TRK/BAL button, the IHUM DAPU will start to acquire the data as defined by the vibration acquisition table for pilot initiated track and balance. While the acquisition is in progress, the caption shall be illuminated. This function may only be selected if the VIBRATION and CREW CHG captions are extinguished.

(4) Power Assurance

Pressing the PWR ASS button will initiate a power assurance data acquisition, and the caption will be illuminated for a period of 5 seconds. This function may only be selected if the CREW CHG caption is extenguished.

(5) Crew Change

This option is used to initiate the rotors running crew change option. If the pilot presses this in flight, nothing will happen and the caption will not illuminate. Similarly, the option shall not operate when any other caption (TRK/BAL, VIBRATION, EVENT or PWR ASS) is lit.

If the aircraft is on the ground and no caption is lit when this option is selected, the caption will illuminate and the DAPU will write the appropriate data files to the MDR. The pilot may extract the removable media from the MDR when the "Busy" lamp located inside the door of the MDR goes out.

When a removable media for the next crew has been prepared by the groundstation and inserted into the MDR, a second press of the crew CHG button will instruct the DAPU to read the required data files from the MDR. The caption will extinguish on the second press.

## (2) Cockpit Display Unit (CDU)

The CDU illustrated in Figures 9 and 11 is shared with the RNAV navigation system, having both ARINC 429 and RS422 interfaces. In some cases the CDU will be dedicated only to IHUMS, although both interfaces will still be fitted.

This unit acts as the centralised acquisition and entry panel for all forms of data. The CDU is the Racal RNAV2 having a monochrome CRT display. The unit will have dual capability being able to act as both an RNAV2 navigational computer, and a HUM CDU. This gives the advantage that on all aircraft fitted with an RNAV2 installation, a single display will be available, thus further reducing the weight and size of two separate units.

### (a) Control of Operating Mode

Dedicated IHUMS only CDU.
In this case the CDU shall power up in IHUM Mode, and will stay in that mode in all cases.

### (3) Shared RNAV-2/IHUM CDU

In this application illustrated in Figure 10 the CDU will power up in RNAV-2 mode, and may be switched back and forth between RNAV-2 and IHUM modes under pilot control as defined in this paragraph.

To obtain access to the IHUMS system from RNAV-2, the "up" and "down" keys will be pressed together. On change of modes the CDU will transmit a "DATA" key code to cause the IHUM system to write the main IHUM menu screen.

To obtain access to the RNAV system the pilot may (a) press the "up" and "down" keys together, in which case the system will display the last screen used before leaving RNAV-2, or (b) press one of the specific keys (NAV, VNAV, NAV AID, Flight PLan or Go Direct) to bring up the associated screen directly, or (c) press DATA, when in IHUM Mode with an RNAV warning caption shown in the top right of the screen, in which case the CDU will change to RNAV mode and bring up the warns page directly.

**Claims**

1. An aircraft health and usage monitoring system comprising a computer system for processing data relating to both flight profiles and selected indicators of health and usage of an aircraft, means to monitor the flight profile and the selected indicators and to supply corresponding data to the computer system, the computer system having predetermined thresholds therein in respect of the selected indicators and being arranged to record the duration and extent by which any threshold is exceeded in use of the aircraft, the indicators of the health and usage of the aircraft being selected from the following: engine healthy transmission health, airframe health, aircraft systems health.

2. An aircraft monitoring system as claimed in Claim 1, wherein the computer system includes means for downloading information recorded in the computer system relating to the aircraft health and usage for on board processing or subsequent analysis.

3. An aircraft monitoring system as claimed in Claim 2, wherein the computer system has output means for writing data accumulated in the computer system from the monitoring means in the course of use of the aircraft to a recording medium for on board processing or use and analysis by a separate ground based computer system to enable the aircraft health and usage to be monitored.

4. An aircraft monitoring system as claimed in any of Claims 1 to 3, including display means for displaying to the aircrew when one or more of the selected indicators is exceeded.

5. An aircraft monitoring system as claimed in any of the preceding claims and in the case where the aircraft is a helicopter wherein the indicators are selected from the following: main rotor track and balance; tail rotor balance; airframe vibration; main gearbox vibration; intermediate gearbox vibration, tail gearbox vibration; accessory gearbox vibration; engine vibration; gearbox oil debris and engine oil debris.

6. An aircraft monitoring system as claimed in Claim 4, wherein means are provided for monitoring and supplying data to the computer system for total engine running times, time spent by engines operating in selected operating bands; time spent by rotor systems including main, intermediate, tail and accessory gearboxes in selected operating condition and total running time for rotor heads and transmission systems.

7. An aircraft monitoring system as claimed in Claim 5 or Claim 6, wherein the indicators include means for determining stress on one or more components of the aircraft engine(s)/transmission(s)/air frame and the computer system includes means for calculating low cycle fatigue (LCF) from the stress information obtained in relation to those components and for storing the resulting information for subsequent processing.

8. An aircraft system as claimed in any of the preceding claims wherein means are provided for supplying information relating to engine performance to the computer system and the computer system includes means for calculating the engine performance and storing the resulting information for subsequent processing.

9. An aircraft monitoring system as claimed in any of the preceding claims wherein a crash protected recorder is provided which is coupled to the computer system to receive selected flight data and health information therefrom.

10. An aircraft monitoring system as claimed in any of the preceding claims, wherein a cockpit voice recorder is included in the system.

FIG. 1.  BHL INTEGRATED FLIGHT RECORDING, HEALTH AND USAGE MONITORING SYSTEM (IHUMS)

CWP WARNING

DATA ACQUISITION AND PROCESSING UNIT

VIBRATION RECORDING, USAGE EXCEEDANCE AND ALL MONITORING.

INTERNAL SEGREGATION

DIGITAL FLIGHT DATA ACQUISITION PROCESS

SENSORS

FLIGHT PATH
AIRFRAME
ENGINES
TRANSMISSION
CONTROLS
DISCRETES
OIL DEBRIS
ROTOR TRACK

PILOTS CONTROL UNIT

CARRY ON BOARD DIAGNOSTICS COMPUTER

MAINTENANCE DATA

DISK DRIVE

GROUND BASED HUM SYSTEM

GEARBOX VIBRATION ANALYSIS
USAGE DATABASE
TREND ANALYSIS
ROTOR TRACK AND BALANCE DIAGNOSTICS
MAINTENANCE PREDICTION
CRASH RECORDER REPLAY
COCKPIT VOICE RECORDER REPLAY

DFDR DATA

CRASH PROTECTED RECORDER

DOWNLOADED BY DTU AS REQUIRED

PILOTS MIC
COPILOTS MIC
AREA MIC

CVR CONTROLLER

EP 0 407 179 A1

FIG. 2.

EXISTING
AIRCRAFT
INSTRUMENTATION

AIRCRAFT
TYPE
SELECTOR
(1 OF 8)

CONTROLS

ACCELEROMETERS

YAW RATE

MISCELLANEOUS
INPUTS

AIR DATA

OIL DEBRIS

TRANSMISSION
ACCELEROMETERS
12 OFF

AIRFRAME (8 OFF)
ACCELEROMETERS

ENGINE (4 OFF)
ACCELEROMETERS

MAIN ROTOR
TRACKER

MAIN ROTOR AZIMUTH
TAIL ROTOR AZIMUTH
TAIL ROTOR D/S AZIMUTH
ANCILLARY AZIMUTH
ENGINE PICK OFF AZIMUTH

IHUMS
POWER SUPPLY
UNIT (IPSU)

DISCRETE
INPUTS
(48 OFF)

FREQUENCY
INPUTS
(8)

ANALOGUE
INPUTS
(116 WIRES)

ARNC 429
(8 INPUTS)

INTERFACES

SELECTION

INTERFACE

INTERFACE

INTERFACE

INTERFACE

NON
VOLATILE
R.A.M.

MICRO-
PROCESSOR
A ('BLUE')

SHARED
MEMORY

MICRO-
PROCESSOR
B ('WHITE')

ACQUISITION
CONTROL
AND
SIGNAL
ADVANCE

TIMING
CONTROL

DATA
ACQUISITION
AND PROCESSING
UNIT
(D.A.P.U.)

20

FIG. 2 (CONTD.)

AREA MICROPHONE

INTEGRATED HEALTH & USAGE MONITORING SCHEMATIC

IHUMS MAINTENANCE PANEL (I.M.P.)

COCKPIT VOICE AND FLIGHT DATA RECORDER (C.V.F.D.R.)

BITE STATUS

BITE STATUS

SUMMING AMPLIFIER

S.I.U. TEST SOCKET

SYSTEM INTERROGATION UNIT (S.I.U.)

PILOT MIC/TELS

CO-PILOT MIC/TELS

QUICK ACCESS RECORDER (Q.A.R.) △

BITE STATUS

GROUND STATION

USER INTERFACE

AIRCRAFT DETAILS

MAINTENANCE DATA RECORDER (M.D.R.)

DOWNLOAD MEDIA

DIAGNOSTIC PROGRAMS

ROTOR TRACK & BALANCE TRANSMISSION ENGINES

COCKPIT DISPLAY UNIT (C.D.U.)

MAINTENANCE SUPPORT PROGRAM WORK CARDS STATISTICS

MAINTENANCE PLANNING RELIABILITY REPORTS DIAGNOSTIC ENHANCEMENTS

PILOT INTERFACE PANEL (P.I.P.) **

KEY
△ OPTIONAL EQUIPMENT FOR TRIALS WORK ETC.

** PILOT INTERFACE PANEL REQUIRED IF COCKPIT DISPLAY UNIT NOT INSTALLED.

DATA BASE AND ARCHIVE

FIG. 3. CVR/FDR SCHEMATIC

COCKPIT VOICE RECORDER

FLIGHT DATA RECORDER

PILOT MIC/TELS

CO-PILOT MIC/TELS

SYSTEM INTERROGATION UNIT (S.I.U.)

SUMMING AMPLIFIER

S.I.U. TEST SOCKET

AREA MICROPHONE

IHUMS MAINTENANCE PANEL (I.M.P.)

BITE STATUS

BITE STATUS

SELECTION

INTERFACES

DATA ACQUISITION AND PROCESSING UNIT (D.A.P.U.)

AIRCRAFT TYPE SELECTOR (1 OF 8)

QUICK ACCESS RECORDER (Q.A.R.)

DISCRETE INPUTS (48 OFF)

FREQUENCY INPUTS (8)

ANALOGUE INPUTS (146 WIRES)

ARINC 429 (8 INPUTS)

EXISTING AIRCRAFT INSTRUMENTATION

CONTROLS

ACCELEROMETERS

YAW RATE

MISCELLANEOUS INPUTS

AIR DATA

IHUMS POWER SUPPLY UNIT (IPSU)

KEY
Δ OPTIONAL EQUIPMENT FOR TRIALS WORK ETC.

FIG. 4.

FIG. 4 (CONTD.)
CVR/FDR/MDR SCHEMATIC

FIG. 5.

FIG. 5 (CONTD.)
CVR/FDR/MDR &
AIRFRAME DIAGNOSTICS
SCHEMATIC

KEY
△ OPTIONAL EQUIPMENT FOR
TRIALS WORK ETC.

** PILOT INTERFACE PANEL
REQUIRED IF COCKPIT DISPLAY
UNIT NOT INSTALLED.

FIG. 6.

EP 0 407 179 A1

FIG. 6 (CONTD.)
CVR/FDR/MDR & TRANSMISSION
SYSTEM DIAGNOSTICS
SCHEMATIC.

KEY
△ OPTIONAL EQUIPMENT FOR
  TRIALS WORK ETC.

** PILOT INTERFACE PANEL
REQUIRED IF COCKPIT DISPLAY
UNIT NOT INSTALLED.

28

FIG. 7

FIG. 7 (CONT'D.)
CVR/FDR/MDR &
ENGINE DIAGNOSTICS
SCHEMATIC

AREA MICROPHONE

IHUMS MAINTENANCE PANEL (I.M.P.)

COCKPIT VOICE AND FLIGHT DATA RECORDER (C.V.F.D.R.)

BITE STATUS

BITE STATUS

SUMMING AMPLIFIER

S.I.U. TEST SOCKET

SYSTEM INTERROGATION UNIT (S.I.U.)

PILOT MIC/TELS

CO-PILOT MIC/TELS

QUICK ACCESS RECORDER (Q.A.R.) △

BITE STATUS

MAINTENANCE DATA RECORDER (M.D.R.)

DOWNLOAD MEDIA

GROUND STATION

USER INTERFACE

AIRCRAFT DETAILS

DIAGNOSTIC PROGRAMS

ENGINES

COCKPIT DISPLAY UNIT (C.D.U.)

MAINTENANCE SUPPORT PROGRAM WORK CARDS

STATISTICS

MAINTENANCE PLANNING
RELIABILITY REPORTS
DIAGNOSTIC ENHANCEMENTS

PILOT INTERFACE PANEL (P.I.P.) **

KEY
△ OPTIONAL EQUIPMENT FOR TRIALS WORK ETC.

** PILOT INTERFACE PANEL REQUIRED IF COCKPIT DISPLAY UNIT NOT INSTALLED.

DATA BASE AND ARCHIVE

30

## FIG. 8.

| EVENT | PRW ASS | CREW CHG | MDR |
| EVENT | PRW ASS | CREW CHG | MDR |
| VIBRATION | TRK + BAL | ENG.1 VIB / ENG.2 VIB | ◎ |
| VIBRATION | TRK + BAL | ENG. VIB. | LAMP TEST |

FIG. 9.

FIG. 10.

FIG. 11.
THE CDU.

# FIG. 12.
## THE I.M.P. PANEL

FIG. 13.

THE P.I.P. PANEL

FIG. 14.

THE D.A.P.U.

DATA ACQUISITION AND
PROCESSING UNIT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PROCEEDINGS OF THE IEEE 1987 NATIONAL AEROSPACE AND ELECTRONICS CONFERENCE vol. 4, 18 May 1987, pages 1266 - 1271; J.A. COLLINS ET AL: "THE TIME STRESS MEASUREMENT DEVICE: A NEW TECHNIQUE/TOOL FOR LIFE ANALISYS AND TESTABILITY" * page 1266, right-hand column, paragraphs 3 - 4 * * page 1267, right-hand column, paragraph 3 * * page 1268, right-hand column, paragraphs 2 - 3 * * page 1271, left-hand column, paragraph 2 - right-hand column, paragraph 1 * | 1-3, 8 | B64D43/00 B64F5/00 G07C3/00 |
| Y | | 1-4, 6, 7, 9, 10 | |
| Y | GB-A-2020432 (ARCUBOS LTD) * page 1, line 55 - page 2, line 88; figures 1, 2 * | 1-4, 9 | |
| Y | FR-A-1564106 (NORTHROP CO.) * page 1, left-hand column, line 1 - right-hand column, line 2 * * page 2, left-hand column, lines 4 - 25 * | 4, 6, 7, 10 | TECHNICAL FIELDS SEARCHED (Int. Cl.5 ) B64D B64C B64F G07C |
| Y | US-A-4733361 (KRIESER ET AL) * column 1, line 18 - column 3, line 29 * * column 7, lines 51 - 58; figure 1 * | 6, 7 | |
| A | | 1, 5 | |
| Y | US-A-3461429 (M.R. GRAY) * column 1, line 16 - column 2, line 34 * | 9 | |
| A | | 1 | |
| A | GB-A-2192723 (MBB) * page 1, lines 47 - 87 * | 1, 7 | |

The present search report has been drawn up for all claims

| Place of search | Date of completion of the search | Examiner |
|---|---|---|
| THE HAGUE | 12 SEPTEMBER 1990 | ESTRELA Y CALPE J. |